Europäisches Patentamt

European Patent Office

Office européen des brevets

(11) Veröffentlichungsnummer: **0 116 115 B1**

# EUROPÄISCHE PATENTSCHRIFT

(45) Veröffentlichungstag der Patentschrift:
21.05.86

(51) Int. Cl.⁴: **H 01 M 4/50, H 01 M 4/08**

(21) Anmeldenummer: 83109381.0

(22) Anmeldetag: 21.09.83

(54) Verfahren zur Herstellung positiver Elektroden für galvanische Elemente, insbesondere Lithium-Mangandioxidzellen.

(30) Priorität: 13.11.82 DE 3242139

(43) Veröffentlichungstag der Anmeldung:
22.08.84 Patentblatt 84/34

(45) Bekanntmachung des Hinweises auf die Patenterteilung:
21.05.86 Patentblatt 86/21

(84) Benannte Vertragsstaaten:
BE CH FR GB IT LI NL SE

(56) Entgegenhaltungen:
DE - A - 3 036 962
FR - A - 1 509 122
FR - A - 2 167 716
GB - A - 2 041 633

JOURNAL OF THE CHEMICAL SOCIETY, Band 129, Nr. 9, September 1982, Seiten 1861-1865, Manchester, New Hampshire, USA G. PISTOIA: "Some restatements on the nature and behavior of MnO2 for LI"
PATENTS ABSTRACTS OF JAPAN, Band 4, Nr. 75(E-13)(557), 31. Mai 1980, Seite 70E13
CHEMICAL ABSTRACTS, Band 95, Nr. 18, November 1981, Seite 200, Nr. 153879e, Columbus, Ohio, USA
ELECTROCHIMICA ACTA, Band 26, Nr. 10, Oktober 1981, Seiten 1467-1476, Pergamon Press Ltd., Oxford, GB. K. TAKAHASHI: "Dry cell and battery industry and

(73) Patentinhaber: Accumulatorenwerke Hoppecke Carl Zoellner & Sohn GmbH & Co. KG, Bontkirchener Strasse 1 Postfach 1140, D-5790 Brilon 2 (DE)

(72) Erfinder: Schmöde, Hans-Peter, Ing.phys., Karlstrasse 13, D-5790 Brilon (DE)
Erfinder: Kohlhase, Michael, Am Etzelsberg 48, D-5790 Brilon (DE)

(74) Vertreter: Patentanwälte Dipl.-Ing. Alex Stenger Dipl.-Ing. Wolfram Watzke Dipl.-Ing. Heinz J. Ring, Kaiser-Friedrich-Ring 70, D-4000 Düsseldorf 11 (DE)

(56) Entgegenhaltungen: (Fortsetzung)
powder technology with emphasis on powdered manganese dioxide"
JOURNAL OF POWER SOURCES, Band 8, Nr. 2/3, September/Oktober 1982, Seiten 133-141, Elsevier Sequoia, Lausanne, CH. C.-J. EULER: "Battery manganese dioxide - A survey of its history and etymology"
ELECTROCHIMICA ACTA, Band 27, Nr. 7, Juli 1982, Seiten 833-835, Pergamon Press Ltd., Oxford, GB. M. VOINOV: "MnO2: Structure and activity"

## Beschreibung

Die Erfindung betrifft ein Verfahren zur Herstellung positiver Elektroden für elektrochemische Elemente mit nicht wässrigem Elektrolyten, insbesondere Li/MnO$_2$-Zellen, in denen Mangandioxid als aktives Material verwendet wird, welches im Gemisch mit einem leitenden Mittel und einem Bindemittel zur Elektrode geformt und einer abschließenden Wärmebehandlung unterzogen wird. Die Erfindung betrifft ferner eine gemäß diesem Verfahren hergestellte Kathode, insbesondere einer Li/MnO$_2$-Zelle.

Ein Verfahren der eingangs genannten Art ist aus der US-PS 4 133 856 bekannt. Dabei findet eine erste Wärmebehandlung des Mangandioxids bei Temperaturen statt, die größer als 250°C sind. Die Zielsetzung ist, die notwendige Entfernung von Wasser aus dem Mangandioxid vorzunehmen, um es für die Verwendung in Zellen mit nicht wässrigem Elektrolyten aufzubereiten. Eine unvollständige Entfernung des Wassers würde nachteilig hinsichtlich der Funktionsfähigkeit und der Leistung der Zelle mitsichbringen. Da im Mangandioxid ein großer Anteil sowohl gebundenen Wassers als auch zusätzlichen anhaftenden Wassers vorliegt, reicht die erste Wärmebehandlung allein nicht aus. Nachteiligerweise wird dabei nur das Oberflächenwasser, nicht jedoch das gebundene Wasser entfernt. Es ist daher bei dem bekannten Verfahren notwendig, das bereits wärmebehandelte Mangandioxid nach dem Mischen mit einem leitfähigen Zusatz und einem Bindemittel als Formling einer zweiten Wärmebehandlung zu unterziehen. Die erste Behandlungsstufe findet bei Temperaturen zwischen 350 und 430°C und die zweite Behandlungsstufe bei Temperaturen im Bereich von 200 bis 350°C statt. Das Verfahren ist dadurch sehr aufwendig, erfordert hohen Energieeinsatz und bewirkt eine Strukturveränderung des Mangandioxids von γ-MnO$_2$ zu β-MnO$_2$. Hierdurch wird die Aktivität nachteiligerweise verringert.

Ein ähnliches Verfahren ist aus der DE-OS 30 00 189 bekannt, bei dem ebenfalls eine zweistufige Wärmebehandlung vorgenommen wird. Auch hierbei werden Temperaturen zwischen 220 und 350°C angewandt. Anders als bei dem Verfahren nach der US-PS 4 133 856, bei dem es nicht gelingt, das in dem Formkörper eingeschlossene Wasser durch das Erhitzen nach dem Verformen im zweiten Wärmebehandlungsschritt vollständig zu entfernen, ist hier vorgeschlagen, vor der Formung der Elektrode die erhaltene Mischung aus Mangandioxid, dem leitenden Mittel und dem Bindemittel der zweiten Wärmebehandlung zu unterziehen. Hierdurch soll es gelingen, die Entladungseigenschaften der Zelle und die Lagerfähigkeit zu verbessern. Nachteilig bleibt jedoch weiterhin, daß bei hohen Temperaturen zwei Wärmebehandlungen vorgenommen werden müssen, des als solche aufwendig sind und darüber hinaus die Struktur des verwendeten Mangandioxids negativ beeinflussen.

Insgesamt ergibt sich aus dem Stand der Technik, daß die elektrochemischen Eigenschaften von Li/MnO$_2$-Zellen sehr stark von der Herstellungsart und Zusammensetzung der positiven Elektroden abhängen, wobei bislang Mangandioxid mit einer Gamma-Kristallstruktur gegenüber der β-Kristallform wegen der höheren Aktivität bevorzugt wurde, die notwendige Entfernung des gebundenen Wassers sowie des Oberflächenwassers jedoch bei Temperaturen vorgenommen werden mußte, die eine Umwandlung des γ-Mangandioxids in die β-Kristallstruktur unter Verringerung der Aktivität begünstigen. Darüber hinaus betreffen die bekannten Verfahren grundsätzlich die trockene, wasserfreie Herstellung der Kathoden.

Der Erfindung liegt die Aufgabe zugrunde, ein Verfahren zur Herstellung positiver Elektroden für elektrochemische Elemente, mit nicht wässrigem Elektrolyten, insbesondere Li/MnO$_2$-Zellen, mit Mangandioxid als aktivem Material zu entwickeln, welches einfach durchführbar ist, geeignet ist, hohe Zellenleistungen auch für komplette Entladungen bis in den Bereich tiefer Temperaturen von -30°C zu erbringen, mit welchem auch die Lagerfähigkeit verbessert ist. Schließlich bezweckt die Erfindung, eine verbesserte Kathode insbesondere für eine Li/MnO$_2$-Zelle vorzuschlagen.

Die Aufgabe ist erfindungsgemäß dadurch gelöst, daß ein synthetisches Mangandioxid mit einer δ-Kristallstruktur verwendet wird, welches nach Herstellung des Formlings der abschließenden Wärmebehandlung zwischen 180°C und 200°C unterworfen wird. Vorzugsweise werden unter Meidung der bislang für notwendig angesahenen Wärmebehandlung MnO$_2$, Ruß, Methanol, Polytetrafluoräthylen in wässriger Suspension und Wasser miteinander gemischt und zu einer Paste verrührt und/oder geknetet, wird anschließend die Paste in eine vorgegebene Form eingebracht, der Formling mit einem Metall-Streckgitter verpreßt und abschließend als einzige Wärmebehandlung die Trocknung durchgeführt. Dabei wird vorteilhafterweise eine Ausgangsmischung von 40 bis 60 Gew.% MnO$_2$, 3 bis 8 Gew.% Ruß, 4 bis 8 Gew.% Methanol, 2 bis 6 Gew.% Polytetrafluoräthylen in wässriger Suspension und Wasser verwendet. Im Vergleich zu den bisher bekannten Mischungen aus 65 bis 95 Gew.% Mangandioxidpulver, 20 bis 30 Gew.% Kohlenstoffpulver und ggf. 15 bis 2 Gew.% Polytetrafluoräthylenpulver ist es die überraschende Erkenntnis der Erfindung, mit relativ geringen Gewichtsprozenten an Mangandioxid und Ruß bei einem hohen Wasseranteil von beispielsweise 34 Gew.% nur einen einzigen Trocknungsverfahrensschritt bei unter 200°C zu benötigen, um eine wasserfreie positive Elektrode herstellen zu können.

Es ist vorteilhaft, zunächst 45 bis 55 Gew.%, vorzugsweise 50 Gew.% MnO$_2$, mit 4 bis 6 Gew.%, vorzugsweise 5 Gew.% Ruß zu mischen, die Mischung einer Homogenisierung zu unterziehen, dann durch Zurühren von 6 bis 7 Gew.%, insbesondere 6,5 Gew.% Methanol, 4 bis 5 Gew.%, vorzugsweise 4,5 Gew.% Polytetrafluoräthylen und etwa 34 Gew.% Wasser die Paste herzustellen und dann den abschließenden Trocknungsvorgang durchzuführen.

Das verwendete $MnO_2$ hat grundsätzlich den Vorteil, das Wasser, also auch das gebundene Wasser, bei bislang nicht bekannter niedriger Temperatur abzugeben, so daß es in $Li/MnO_2$-Zellen mit überraschend geringem Verlust an elektrochemischer Aktivität einsetzbar ist. Besonders vorteilhaft ist ein Braunstein mit einer Korngröße von $< 50\mu$, der sehr gute Formungs- und Gleitfähigkeitseigenschaften aufweist. Letztere werden weiter verbessert, wenn zur Mischung ein gleitfähiger Ofenruß verwendet wird. Dabei kann mit Vorteil als Binder eine wässrige PTFE-Suspension Verwendung finden.

Die $Li/MnO_2$-Zelle der Erfindung besteht aus einem hermetisch verschlossenen Edelstahl-Topf, in welchem abwechselnd flache Lithiumanoden in Form von in Polypropylenseparatoren eingetaschter Lithium-Folie und $MnO_2$-Kathoden obenbeschriebener Art gemeinsam mit einem Elektrolyten angeordnet sind, der aus Propylencarbonat, 1,2 Dimethoxyäthan im Verhältnis 1:1 und 1 M Lithiumtetrafluoroborat als Leitsalz besteht. In der Kathode wird dabei erfindungsgemäß ein Aluminium-Streckgitter als Träger für die getrocknete Paste benutzt.

Die beschriebene $Li/MnO_2$-Zelle der Erfindung zeichnet sich durch hohe Leistung auch für komplette Entladungen bis in den Bereich tiefer Temperaturen von -30°C aus. Damit gelangt erstmals eine derartige Zelle in den Leistungs-Energie-Bereich des $Li/SO_2$-Systems.

Weitere Einzelheiten, Merkmale und Vorteile der Erfindung ergeben sich aus der nachfolgenden Beschreibung eines Herstellungsverfahrens für positive $MnO_2$-Elek-troden sowie einer $Li/MnO_2$-Zelle unter Bezugnahme auf die zugehörige Zeichnung. In der Zeichnung zeigt:

Fig. 1 eine $Li/MnO_2$-Zelle schematisch,

Fig. 2 den Verlauf der Klemmanspannung über der Kapazität bei -30°C,

Fig. 3 den Verlauf der Klemmenspannung über der Kapazität bei -30°C mit einem konstanten Strom von $I_{20}$ (20 Stunden) und

Fig. 4 den Verlauf der Kapazität über der Temperatur.

Grundsätzlich besteht die erfindungsgemäße $Li/MnO_2$-Zelle aus einem topfförmigen Gehäuse 1 aus Edelstahl, welches oben durch einen Deckel 2 hermetisch verschlossen ist. Durch den Deckel 2 erstreckt sich ein in eina Glas/Metall-Dichtung 3 eingebettetes Füllrohr 4, welches gleichzeitig den positiven Boden aufgrund entsprechender innerer Anschlüsse darstellt, während das Gehäuse 1 selbst den negativen Pol bildet.

Im Gehäuse befindet sich als Elektrolyt 5 Propylencarbonat (PC) mit 1,2 Dimethoxyäthan (DME) im Mischungsverhältnis 1:1 sowie 1 M Lithiumtetrafluoroborat $LIBF_4$ als Leitsalz. Die Anode besteht aus einer Lithiumfolie 6, die in einen Polypropylen-Separator 7 eingetascht ist. Die negative Elektrode ist flächig ausgebildet und im Ausführungsbeispiel zu einer zylindrischen Zelle gemeinsam mit der Kathode 8 zusammengestellt.

Die positive Elektrode 8 wird unter Verwendung von Rho-Mangandioxid hergestellt, indem 10 Gewichtsteile $MnO_2$ mit einem Gewichtsteil Ruß trocken gemischt werden. Aus der Vormischung wird eine Paste hergestellt, indem 75 Gewichtsteile $MnO_2$/Ruß-Gemisch mit 50 Gewichtsteilen Wasser und 10 Gewichtsteilen Methanol sowie 6 Gewichtsteilen Polytetrafluoräthylen gerührt und geknetet werden. Es liegt dann eine Kathodenpaste vor, die Wasser in Form gebundenen Wassers sowie anhaftenden Oberflächenwassers enthält.

Anschließend wird die Kathodenpaste in eine vorgegebene Form pastiert und darin mit einem Aluminium-Streckgitter verpreßt. Abschließend wird eine Wärmebehandlung bei einer Temperatur von 195°C durchgeführt. Wesentlich für die Abgabe des Wassers während der Wärmebehandlung ist die Fähigkeit des verwendeten $MnO_2$, auch das eingeschlossene Wasser bei Temperaturen unterhalb von 200°C vollständig im Rahmen der Wärmebehandlung abzugeben.

Der bei der Herstellung der Kathode verwendete Ruß als leitfähiges Additiv zum $MnO_2$ stellt im Gegensatz zu den sonst verwendete Acethylen-Rußen einen Furnace-Ruß hoher relativer Leitfähigkeit dar. Dieser Ruß hat sich als optimal in bezug auf das Kathodenvolumen ($Ah/cm^3$), das Porenvolumen, die innere Porenoberfläche (Li-Einlagerung) und die Aktivität (Leistung) erwiesen. Als Binder ist eine wässrige PTFE-Suspension verwendet worden.

Wesentlich ist auch die Anwendung des Aluminium-Streckmetallgitters, welches folgende Vorteile im Rahmen des Aufbaus der $Li/MnO_2$-Zelle bietet:

Aufgrund der spezifischen Materialeigenschaften des Aluminiums wird eine hohe elektrische Leitfähigkeit bei guter Verformbarkeit erzielt. Insbesondere eignet sich dieses Gitter zur Herstellung von Wickelelektroden, bei denen üblicherweise die Formgebung aufgrund der engen inneren Radien Schwierigkeiten bereitet. Zusätzlich vorteilhaft ist das im Vergleich zu Nickel oder Edelstahl geringe Gewicht des Aluminium-Streckgitters.

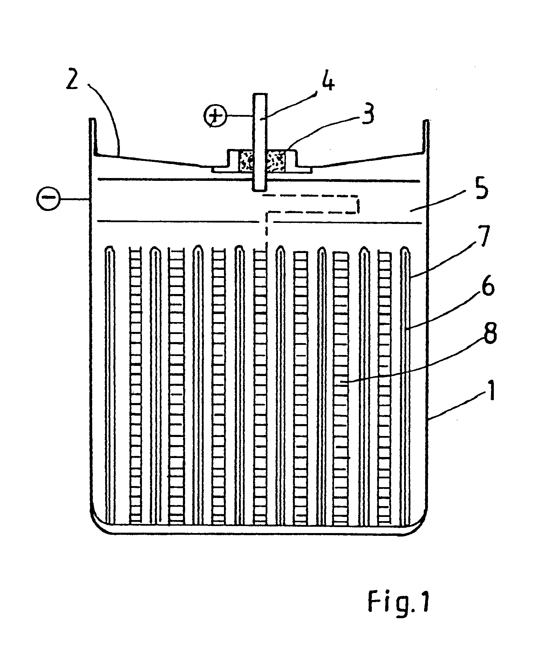

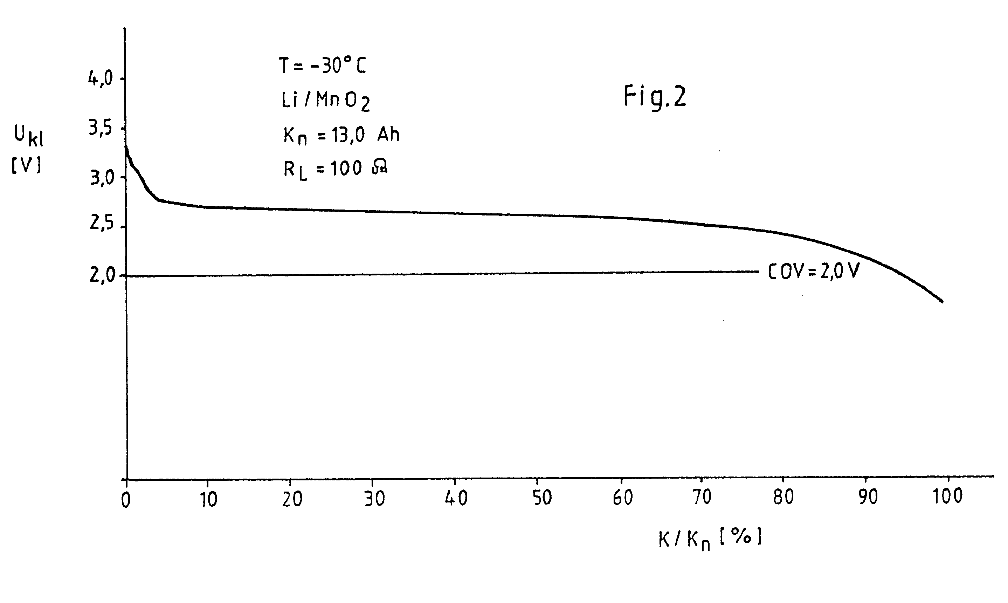

Fig. 2 der Zeichnung zeigt eine Entladekurve des in Fig. 1 der Zeichnung dargestellten Elementes bei einer Temperatur von -30°C an einem Entladewiderstand von 100 Ω. Die Ausbeute bis zu einer Entladeschlußspannung beträgt 94,7 % der angegebenen Nennkapazität $K_n$ = 13 Ah.

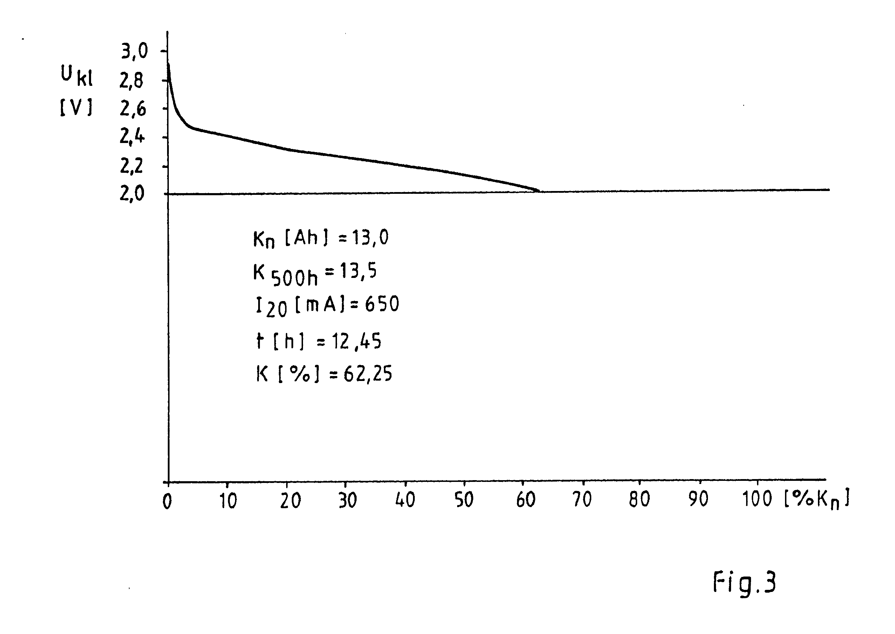

Fig. 3 der Zeichnung zeigt für das gleiche Element die Abhängigkeit der Klemmenspannung $U_{kl}$ von der entnommenen Kapazität K bei einem konstanten Entladestrom $I_{20}$ = 0,65 A und einer Temperatur von -30°C. Die Ausbeute beträgt in diesem Fall 62,25 %. In beiden Fällen betrug die vorgegebene Entladeschlußspannung 2,0 V. Es ist damit verdeutlicht, daß die erreichten elektrischen Werte wesentlich über den entsprechenden Werten von bekannten Li/MnO$_2$-Zellen liegen.

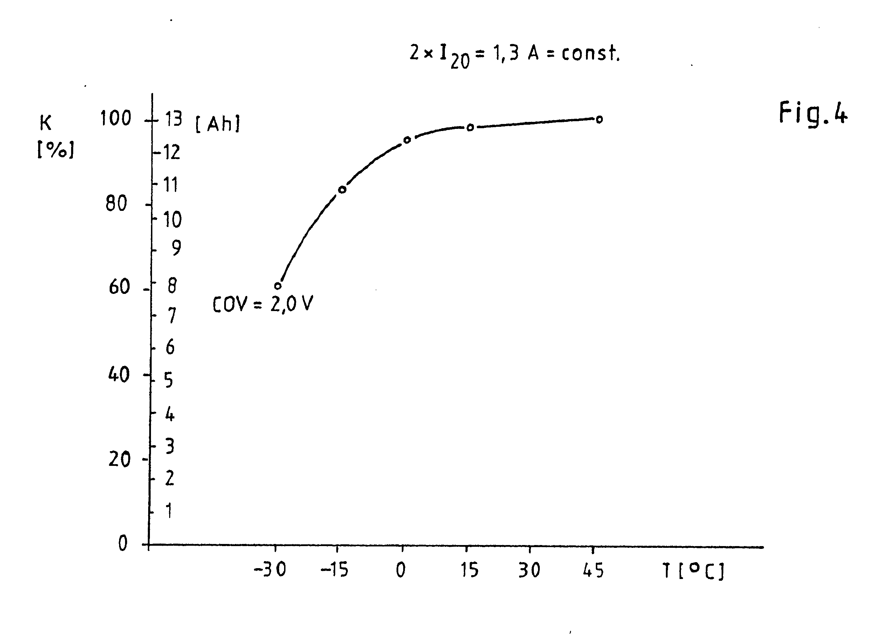

Fig. 4 zeigt die Abhängigkeit der entnehmbaren Kapazität bis zu einer Entladeschlußspannung von 2,0 V für konstante Ströme von $2 \times I_{20} = 1,3$ A von der Umgebungstemperatur.

Insgesamt wird mit der beschriebenen Li/MnO$_2$-Zelle ein elektrochemisches Element vorgestellt, welches außerordentlich hohe Leistungen auch für komplette Entladungen bis in den Bereich tiefer Temperaturen von -30°C aufweist. Folgende Werte wurden festgestellt:

Li/MnO$_2$-Zelle von 41 mm Durchmesser und 51 mm Höhe:

$I = 2 \times I_{20}$ mit Ausbeute 62,25 % K$_n$ erreicht ($-30°$ C)

| | | | |
|---|---|---|---|
| 125 Wh/kg | 250 Wh/l | 6 h | $-30°$ C |
| 150 Wh/kg | 300 Wh/l | 1 h | RT |
| 300 Wh/kg | 600 Wh/l | 500 h | 'RT |

Entladeschlußspannung jeweils 2,0 V
K$_n$ = 13 Ah.

**Bezugszeichenliste:**
- 1 Gehäuse
- 2 Deckel
- 3 Glas/Metall-Dichtung
- 4 Füllrohr
- 5 Elektrolyt
- 6 Lithiumfolie
- 7 Polypropylen-Separator
- 8 Kathode

**Patentansprüche:**

1. Verfahren zur Herstellung positiver Elektroden für elektrochemische Elemente mit nicht wässrigem Elektrolyten, insbesondere Li/MnO$_2$-Zellen, in denen Mangandioxid als aktives Material verwendet wird, welches im Gemisch mit einem leitenden Mittel und einem Bindemittel zur Elektrode geformt und einer abschließenden Wärmebehandlung unterzogen wird, <u>dadurch gekennzeichnet,</u> daß ein synthetisches Mangandioxid mit einer δ-Kristallstruktur verwendet wird, welches nach Herstellung des Formlings der abschließenden Wärmebehandlung zwischen 180°C und < 200°C unterworfen wird.

2. Verfahren nach Anspruch 1, dadurch gekennzeichnet, daß MnO$_2$, Ruß, Methanol, Polytetrafluoräthylen in wässriger Suspension und Wasser miteinander gemischt und zu einer Paste verrührt und/oder geknetet werden, daß anschließend die Paste in eine vorgegebene Form eingebracht, der Formling mit einem Metall-Streckgitter verpreßt und abschließend als einzige Wärmebehandlung die Trocknung durchgeführt wird.

3. Verfahren nach den Ansprüchen 1 und 2, dadurch gekennzeichnet, daß eine Ausgangsmischung von 40 bis 60 Gew.% MnO$_2$, 3 bis 8 Gew.% Ruß, 4 bis 8 Gew.% Methanol, 2 bis 6 Gew.% Polytetrafluoräthylen in wässriger Suspension und Wasser verwendet wird.

4. Verfahren nach einem der Ansprüche 1 bis 3, dadurch gekennzeichnet, daß 45 bis 55 Gew.%, vorzugsweise 50 Gew.% MnO$_2$, mit 4 bis 6 Gew.%, vorzugsweise 5 Gew.% Ruß gemischt werden, die Mischung einer Homogenisierung unterzogen wird, dann durch Zurühren von 6 bis 7 Gew.%, insbesondere 6,5 Gew.% Methanol, 4 bis 5 Gew,%, vorzugsweise 4,5 Gew.% Polytetrafluoräthylen und etwa 34 Gew.% Wasser die Paste hergestellt wird.

5. Verfahren nach einem der Ansprüche 1 bis 4, dadurch gekennzeichnet, daß zur Mischung ein leitfähiger Ofenruß verwendet wird.

6. Kathode hergestellt gemäß einem der Ansprüche 1 bis 5, gekennzeichnet durch ein Aluminium-Streckgitter als Träger für die zu trocknende aktive Masse.

**Claims**

1. A process for the production of positive electrodes for electro-chemical elements with nonaqueous electrolytes, especially Li/MnO$_2$-cells, in which manganese dioxide is used as the active material, which in admixture with a conducting medium and a matrix is formed into the electrode and is subjected to a final heat treatment,
characterised in that,
a synthetic manganese dioxide with a δ-crystal structure is used, which after production of the moulded article is subjected to the final heat treatment between 180°C and <200°C.

2. A process according to claim 1, characterised in that MnO$_2$, carbon black, methanol, polytetrafluoroethylene in aqueous suspension and water are mixed together and stirred and/or kneaded to a paste, in that subsequently the paste is placed in a provided mould, the moulded article is pressed with a metal pressing grid and finally the drying is carried out by a single heat treatment.

3. A process according to the claims 1 and 2, characterised in that a starting mixture of 40 to 60 weight% MnO$_2$ 3 to 8.weight% carbon black 4 to 8 weight% methanol 2 to 6 weight% polytetra fluoroethylene in aqueous suspension and water is used.

4. A process according to one of claims 1 to 3, characterised in that 45 to 55 weight%, preferably 50 weight% MnO$_2$, are mixed with 4 to 6 weight%, preferably 5 weight% carbon black, the mixture is subjected to homogenisation, then the paste is produced by stirring in from 6 to 7 weight%, especially 6.5 weight% methanol, 4 to 5 weight%, preferably 4.5 weight% polytetrafluoroethylene and about 34 weight% water.

5. A process according to one of claims 1 to 4, characterised in that a conductive furnace carbon black is used in the mixture.

6. Cathode produced according to one of claims 1 to 5, characterised by an aluminium pressing grid as carrier for the active mass to be dried.

## Revendications

1°. Procédé pour fabriquer des électrodes positives pour des éléments électrochimiques avec des électrolytes non aqueux, notamment des éléments Li/$MnO_2$, dans lesquels on utilise du dioxyde de manganèse en tant que matière active, façonnée sous forme d'électrode en mélange avec un agent conducteur et un liant et soumise ensuite à un traitement thermique final, caractérisé en ce qu'on utilise un dioxyde de manganèse synthétique avec une structure cristalline $\rho$, ce dioxyde étant, après la fabrication de la pièce moulée, soumis au traitement thermique final entre 180°C et < 200°C.

2°. Procédé selon la revendication 1, caractérisé en ce qu'on mélange entre eux du $MnO_2$, du noir de fumée, du méthanol, du polytétrafluoréthylène en suspension aqueuse et de l'eau et on les brasse en une pâte et/ou on les pétrit, en ce qu'on dispose ensuite la pâte dans une forme prédéterminée, on comprime la pièce moulée avec un treillis en métal déployé et on effectue finalement le séchage en tant que traitement thermique unique.

3°. Procédé selon les revendications 1 et 2, caractérisé en ce qu'on utilise un mélange initial de 40 à 60% en poids de $MnO_2$, 3 à 8% en poids de noir de fumée, 4 à 8% en poids de méthanol, 2 à 6% en poids de polytétrafluoréthylène en suspension aqueuse et de l'eau.

4°. Procédé selon l'une des revendications 1 à 3, caractérisé en ce qu'on mélange 45 à 55% en poids, de préférence 50% en poids, de $MnO_2$ avec 4 à 6% en poids, de préférence 5% en poids, de noir de fumée, on soumet le mélange à une homogénéisation, on réalise ensuite la pâte par addition et brassage de 6 à 7% en poids, notamment 6,5% en poids, de méthanol, 4 à 5% en poids, de préférence 4,5% en poids, de polytétrafluoréthylène et 34% d'eau environ.

5°. Procédé selon l'une des revendications 1 à 4, caractérisé en ce qu'on utilise pour le mélange du noir fourneau conducteur.

6°. Cathode fabriquée selon l'une des revendications 1 à 5, caractérisée par un treillis en aluminium déployé en tant que support de la masse active à sécher.

Fig.1

Fig.2

T = –30° C
Li / Mn $O_2$
$K_n$ = 13,0 Ah
$R_L$ = 100 Ω

COV = 2,0 V

$U_{kl}$ [V]

K / $K_n$ [%]

4,0
3,5
3,0
2,5
2,0

0  10  20  30  40  50  60  70  80  90  100

Fig.3

$2 \times I_{20} = 1,3\ A = const.$

Fig.4

COV = 2,0 V